# EUROPÄISCHE PATENTSCHRIFT

(11) **EP 1 893 663 B1**
(45) Veröffentlichungstag und Bekanntmachung des Hinweises auf die Patenterteilung: **26.11.2008**
(21) Anmeldenummer: 06743123.9
(22) Anmeldetag: 07.06.2006
(51) Int. Cl.: C08G 18/10, C08G 18/48, C08G 18/16

(54) **VERFAHREN ZUR HERSTELLUNG VON POLYAMINEN MIT PRIMÄREN AMINOGRUPPEN**
METHOD FOR THE PRODUCTION OF POLYAMINES COMPRISING PRIMARY AMINO GROUPS
PROCEDE DE PRODUCTION DE POLYAMINES COMPORTANT DES GROUPES AMINO PRIMAIRES

(30) Priorität: 17.06.2005 DE 102005028081
(43) Veröffentlichungstag der Anmeldung: 05.03.2008
(73) Patentinhaber: Bayer MaterialScience AG, 51368 Leverkusen (DE)
(72) Erfinder: MAGER, Michael, 51375 Leverkusen (DE)
(86) Internationale Anmeldenummer: PCT/EP2006/005434
(87) Internationale Veröffentlichungsnummer: WO 2006/133839

(56) Entgegenhaltungen:
- EP-A- 0 219 035
- WO-A-03/046040
- DE-A1- 2 948 419
- DE-A1- 3 244 912

## Beschreibung

Die Erfindung betrifft ein Einstufen-Verfahren zur Herstellung von Polyaminen mit primären Aminogruppen, vorzugsweise aromatischen Aminogruppen, durch Hydrolyse von endständige Isocyanatgruppen aufweisenden Verbindungen, sowie deren Verwendung zur Herstellung von Polyurethanhamstoffen, welche ihrerseits zur Herstellung von Beschichtungen oder porösen (Schäume) oder nicht-porösen Formkörpern eingesetzt werden können.

Stand der Technik zur Herstellung solcher Polyamine mit primären Aminogruppen ist beispielsweise das in EP-A 0 219 035 beschriebene Einstufen-Verfahren, in welchem NCOgruppenaufweisende Verbindungen in Wasser enthaltenden Medien, gegebenenfalls in Anwesenheit von Katalysatoren, zu Polyaminen mit primären Aminogruppen abgebaut werden können.

Gegenüber anderen Verfahren des Stands der Technik, können damit nahezu alle isocyanat-(NCO)-funktionellen Verbindungen, insbesondere auch NCO-funktionelle Prepolymere, auf relativ unkomplizierte Weise zu aminofunktionellen Verbindungen (Prepolymeren) abgebaut werden. Der Katalysator, z.B. KOH, wird dabei in so geringen Mengen zugesetzt, dass dieser grundsätzlich im Produkt verbleiben kann, was wiederum eine erhebliche Verfahrensvereinfachung gegenüber allen anderen Verfahren des Stands der Technik darstellt. So müssen nach dem in DE-A 2 948 419 beschriebenen Verfahren große Mengen Base eingesetzt werden (OH⁻/NCO-Verhältnis von mindestens 1,01 : 1), die anschließend bei der Carbamatspaltung mittels starker Mineralsäuren als die entsprechenden Salze anfallen und aufwendig abgetrennt werden müssen.

Das in EP-A 0 219 035 beschriebene Verfahren weist jedoch den großen Nachteil auf, dass die Produkte stets hohe Gehalte an monomeren Diaminen wie Toluylendiamin (TDA) aufweisen. In den Ausfiihrungsbeispielen des genannten Verfahrens wurden TDA-Gehalte von 0,087 bis zu 0,921 % bestimmt. Ein weiterer Nachteil des in EP-A 0 219 035 beschriebenen Verfahrens ist die große Verfärbung der hergestellten Polyamine, verursacht durch die hohen Reaktionstemperaturen bei der Hydrolyse (typischerweise 90°C) und der Aufarbeitung (lange andauernde Destillation bei 80 bis 100°C).

Als mögliche Aufarbeitung des Reaktionsgemisches aus Polyamin, Wasser, Lösungsmittel und Katalysator wurde in EP-A 0 219 035 auch die Extraktion vorgeschlagen, wobei für die vollständige Abtrennung von Restmengen des Katalysators aus der separierten Polyaminphase die Vakuumdestillation oder Dünnschichtdestillation angewendet werden. Diese mehrstufige Aufarbeitung umfassend Extraktion und nachfolgende Destillation ist jedoch sehr aufwendig und daher unerwünscht.

Aufgabe der vorliegenden Erfindung war daher die Bereitstellung eines Verfahrens zur Herstellung von Polyaminen mit primären Aminogruppen durch Hydrolyse der entsprechenden Polyisocyanate, wodurch Produkte mit verringerter Verfärbung und einem geringeren Gehalt an monomeren Di-oder Triaminen erhalten werden können. Die Produkte sollen darüber hinaus eine niedrige Viskosität aufweisen, wobei gleichzeitig eine hohe Konversion von NCO- zu NH₂-Gruppen erzielt werden soll.

Es wurde nun gefunden, dass eine schonende und nahezu quantitative Herstellung solcher Amine gerade dann erreicht wird, wenn die Hydrolyse in einem speziellen Temperaturintervall durchgeführt wird und die Abtrennung des bei der Hydrolyse eingesetzten Lösungsmittels und gegebenenfalls weiterer flüchtiger Bestandteile besonders schonend mittels kontinuierlicher Destillationsverfahren durchgeführt wird.

Gegenstand der vorliegenden Erfindung ist daher ein Verfahren zur Herstellung von Polyaminen mit primären Aminogruppen und einem Anteil an monomerem Di- oder Triamin von weniger als 0,1 Gew.-%, bei dem
A) die freien NCO-Gruppen eines Polyisocyanat-Prepolymers mit einer mittleren NCO-Funktionalität von mindestens 1,5 unter CO₂-Abspaltung
   a1) in Anwesenheit von mindestens 10 Gewichtsteilen, bezogen auf 100 Gewichtsteile des eingesetzten Polyisocyanat-Prepolymers, eines wasserlöslichen oder wassermischbaren Lösungsmittels,
   a2) unter Einwirkung von Wasser bei einem Mol-Verhältnis von Wasser zu NCO-Gruppen von 0,75 bis 50 und einem Gewichtsverhältnis von Lösungsmittel zu Wasser von 3 bis 200,
   a3) in Gegenwart von 0,00005 bis 1 Gew.-%, bezogen auf die Menge des eingesetzten Prepolymers, eines Katalysators und
   a4) unter Einhaltung eines Temperaturintervalls von 30 bis 70°C hydrolysiert und anschließend
B) die flüchtigen Bestandteile der resultierenden Reaktionsmischung mittels kontinuierlicher Destillationsverfahren abgetrennt werden.

Die Herstellung der in A) eingesetzten Polyisocyanat-Prepolymere ist dem Fachmann an sich bekannt und erfolgt durch Umsetzung von der Polyhydroxyverbindungen mit überschüssigen Mengen von Polyisocyanaten.

Geeignete Polyisocyanate sind die dem Fachmann an sich bekannten organischen aliphatischen, cycloaliphatischen, aromatischen oder heterocyclischen Polyisocyanate mit mindestens zwei Isocyanatgruppen pro Molekül sowie Gemische davon. Beispiele für geeignete aliphatische bzw. cycloaliphatische Polyisocyanate sind Di- oder Triiscyanate wie Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI). Als aromatische Polyisocyanate können z.B. 1,5-Naphthalendiisocyanat, Diisocyanatodiphenylmethan (MDI) bzw. Roh-MDI, Diisocyanatomethylbenzol (2,4- und 2,6-Toluylendiisocyanat, TDI), insbesondere das 2,4- und das 2,6-Isomere und technische Gemische der beiden Isomeren sowie 1,3-Bis(isocyanatomethyl)benzol (XDI) eingesetzt werden. Bevorzugt ist jedoch die Verwendung von aromatischen Diisocyanaten. Besonders bevorzugt sind dabei 2,4- und 2,6-Toluylendiisocyanat (TDI), sowie Gemische derselben, sowie die 2,2'-, 2,4'- und 4,4'-Isomere des Diisocyanatodiphenylmethans (MDI), deren Gemische sowie entsprechende mehrkernige MDI-Typen.

Überdies können aber auch die an sich bekannten Folgeprodukte der vorgenannten organischen aliphatischen, cycloaliphatischen, aromatischen oder heterocyclischen Polyisocyanate mit Uretdion-, Allophanat-, Biuret- und/oder Isocyanurat-Struktur eingesetzt werden.

Als Polyhydroxyverbindungen können alle dem Fachmann bekannten Verbindungen eingesetzt werden, welche eine mittlere OH-Funktionalität von mindestens 1,5 aufweisen.

Dies können beispielsweise niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit) sein, aber auch höhermolekulare Polyhydroxyverbindungen wie Polyetherpolyole, Polyesterpolyole, Polycarbonatpolyole sowie Polythioetherpolyole.

Bevorzugt sind Polyetherpolyole mit zahlenmittleren Molekulargewichten Mₙ von 300 bis 20000 g/mol, besonders bevorzugt 1000 bis 12000 g/mol, ganz besonders bevorzugt 2000 bis 6000 g/mol.

Solche Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich.

Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehende beispielhafte genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Polyetherpolyole sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69). Derartige Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z.B. in der US-A 5 158 922 (z.B. Beispiel 30) und EP-A 0 654 302 (S. 5, Z. 26 bis S. 6, Z. 32) beschrieben.

In das erfindungsgemäße Verfahren können prinzipiell auch Mischungen von mehreren Polyisocyanaten und/oder Polyhydroxyverbiridungen eingesetzt werden, bevorzugt ist jedoch die Verwendung nur eines Polyisocyanats.

Typischerweise beträgt dabei das Mol-Verhältnis der NCO-Gruppen der Polyisocyanate zu OH-Gruppen der Polyhydroxyverbindungen 25 : 1 bis 1,5 : 1, bevorzugt 15 : 1 bis 1,7 : 1 und besonders bevorzugt 10 : 1 bis 2 : 1.

Die Umsetzung erfolgt im Allgemeinen bei Temperaturen von 20 bis 140°C, bevorzugt bei 40 bis 100°C, gegebenenfalls unter der Verwendung von aus der Polyurethanchemie an sich bekannten Katalysatoren wie beispielsweise Zinn-Seifen, z.B. Dibutylzinndilaurat oder tertiären Aminen, z.B. Triethylamin oder Diazabicyclooctan (DABCO).

Die Zugabe der Komponenten und gegebenenfalls eines Katalysators der vorgenannten Art kann grundsätzlich in beliebiger Reihenfolge erfolgen. Wird das Polyisocyanat im Überschuss eingesetzt, so ist bevorzugt, dieses nach der Umsetzung von durch Extraktion oder Destillation, vorzugsweise mittels Dünnschichtdestillation, abzutrennen. Die Abtrennung des überschüssigen Polyisocyanats wird dabei soweit geführt, das im resultierenden Polyisocyanat-Prepolymer weniger als 1 Gew.-%, bevorzugt weniger als 0,5 Gew.-% und besonders bevorzugt weniger als 0,1 Gew.-% des Polyisocyanats verbleibt.

Diese geeigneten Polyisocyanatprepolymere weisen bevorzugt einen NCO-Gehalt von 0,5 bis 40 Gew.-%, besonders bevorzugt 1,2 bis 25 Gew.-% und ganz besonders bevorzugt von 1,5 bis 20,5 Gew.-% auf.

Bevorzugt weisen die in A) eingesetzten Prepolymere NCO-Funktionalitäten von 1,5 bis 6, besonders bevorzugt 1,5 bis 4 und ganz besonders bevorzugt 2 bis 3, auf.

Im Schritt a4) des erfindungsgemäßen Verfahrens beträgt der erfindungswesentliche Temperaturbereich der Hydrolyse bevorzugt 50 bis 70°C, besonders bevorzugt 60 bis 70°C, ganz besonders bevorzugt 62 bis 68°C.

Im Schritt a1) des erfindungsgemäßen Verfahrens können als Lösungsmittel grundsätzlich alle wasserlöslichen oder wassermischbaren Amide, Lactame, tetraalkylierte aliphatische Harnstoffe mit 4 bis 12 C-Atomen, wie Tetramethylharnstoff oder Tetraethylharnstoff, aliphatische oder cycloaliphatische Sulfone oder Sulfoxide mit 2 bis 10 Kohlenstoffatomen, wie Tetramethylsulfon oder Dimethylsulfoxid, sowie aliphatische oder cycloaliphatische Phosphorsäureamide, z.B. Hexamethylphosphorsäuretriamid, eingesetzt werden.

Als Lösungsmittel sind jedoch wassermischbare Carbonsäureamide oder Lactame bevorzugt. Besonders bevorzugte wassermischbare Amide sind Carbonsäureamide wie aromatische, aliphatische oder cycloaliphatische Carbonsäureamide mit 1 bis 10 C-Atomen im Säureanteil. Ganz besonders bevorzugt werden Carbonsäuredialkylamide eingesetzt, im einzelnen Dimethylformamid (DMF), Dimethylacetamid, Formamid, Diethylformamid, Dimethylpropionsäureamid, Benzoesäuredimethylamid oder N-Methylpyrrolidon.

Die genannten Lösungsmittel können auch in beliebigen Mischungsverhältnissen zueinander eingesetzt werden.

Eine Mitverwendung von nicht vollständig mit Wasser mischbaren Lösungsmitteln, z.B. Propionitril, Methylethylketon, Ethylacetat oder Kohlenwasserstoffen ist in untergeordneten Mengen möglich, aber nicht bevorzugt.

Bevorzugt beträgt der Anteil des eingesetzten wasserlöslichen oder wassermischbaren Lösungsmittels mindestens 25 Gewichtsteile, besonders bevorzugt 25 bis 150 Gewichtsteile., ganz besonders bevorzugt 75 bis 125 Gewichtsteile, bezogen auf 100 Gewichtsteile des eingesetzten Polyisocyanat-Prepolymers.

Bevorzugt beträgt das Mol-Verhältnis von Wasser zu freien NCO-Gruppen des Polyisocyanatprepolymers 1 bis 35, besonders bevorzugt 1,25 bis 12 und ganz besonders bevorzugt 1,5 bis 7,5.

Bevorzugt beträgt das Gewichtsverhältnis von Lösungsmittel zu Wasser 5 bis 150, besonders bevorzugt 10 bis 100 und ganz besonders bevorzugt 25 bis 75.

Im Schritt a3) des erfindungsgemäßen Verfahrens können als Katalysatoren für die Hydrolysereaktion basische, keine NCO-reaktiven Gruppen enthaltende Verbindungen und/oder Metall-Verbiridungen eingesetzt werden. Die verwendeten Katalysatoren können fest oder flüssig sein, müssen jedoch im Reaktionsgemisch eine ausreichende, bevorzugt vollständige, Löslichkeit besitzen.

Solche basischen Katalysatoren sind beispielsweise anorganische und organische Salze, die in Wasser eine alkalische Reaktion geben. Bevorzugte Verbindungen dieser Art sind Hydroxide von Alkali- und Erdalkalimetallen sowie Tetraalkylammoniumhydroxide, beispielsweise NaOH und KOH, ferner lösliche Aluminate wie Na-Aluminat, Carbonate von Alkalimetallen, insbesondere Soda und Pottasche, Hydrogencarbonate von Alkalimetallen, insbesondere Natrium- und Kaliumhydrogencarbonat, Alkali- und Erdalkalisalze von Mono- und Polycarbonsäuren, die keine NCO-reaktiven Gruppen enthalten, vorzugsweise Salze von aliphatischen Monocarbonsäuren mit bis zu 18 C-Atomen, wie Natriumformiat, Natriumacetat, Kaliumoctoat oder Kaliumstearat. Alkalisalze von gegebenenfalls mit nicht NCO-reaktiven Gruppen substituierten Phenolen und Thiophenolen, lösliche Alkali- und Erdalkalisalze schwacher, vorzugsweise anorganischer Säuren wie Cyansäure, Isocyansäure, Thiocyansäure, Isothiocyansäure, Kieselsäure, Phosphor-III- bis -V-Säuren, Cyanwasserstoffsäure, Stickstoffwasserstoffsäure etc., Alkalimetallmercaptide und Sulfide bzw. Hydrogen(poly)sulfide, β-Diketon-Verbindungen wie die Na-, K-, Mg-Acetylacetonate und Acetoacetate.

Eine weitere Gruppe von Katalysatoren dieser Art umfasst tertiäre Amine, vorzugsweise mit aliphatischen oder cycloaliphatischen Resten, wobei auch Gemische verschiedener tertiärer Amine eingesetzt werden können. Beispiele sind die meist nicht vollständig wasserlöslichen Trialkylamine, wie Trimethylamin, Triethylamin, Tripropylamin, Triisopropylamin, Dimethyl-n-propylamin, Tri-n-butylamin, Triisobutylamin, Triisopentylamin, Dimethylbutylamin, Triamylamin, Trioctylhexylamin, Dodecyldimethylamin, Dimethylcyclohexylamin, Dibutylcyclohexylamin, Dicyclohexylethylamin, Tetramethyl-1,3-butandiamin, aber auch tertiäre Amine mit einer araliphatischen Gruppe wie Dimethylbenzylamin, Diethylbenzylamin, α-Methylbenzyldimethylamin. Bevorzugt sind Trialkylamine mit insgesamt 6 bis 15 C-Atomen in allen Alkylresten, wie Triethylamin bis Triamylamin bzw. Dimethylcyclohexylamin. Gut geeignete tertiäre Amine sind neben den Trialkylaminen solche Amine, welche insbesondere in β-Stellung zur tertiären Gruppe eine weitere tertiäre Amino- oder eine Ethergruppe aufweisen. Beispiele sind Dialkylaminoalkylether oder Bisdialkylaminoalkylether (US-PS 3 330 782, DE-B 1 030 558), z.B.

Dimethyl(2-ethoxyethyl)amin, Diethyl(2-methoxypropyl)amin, Bis[2-dimethylaminoethyl]ether, Bis[2-diethylaminoethyl]ether, Bis-[2-diethylaminoisopropyl]-ether, 1-Ethoxy-2-dimethylamino-ethoxyethan, N-Methylmorpholin, N-Ethylmorpholin, N-Butylmorpholin, ferner permethylierte Polyalkylendiamine wie Tetramethyl-ethylendiamin, Tetramethyl-1,2-propylendiamin, Pentamethyldiethylentriamin, Hexamethyltriethylen-tetramin und höhere permethylierte Homologe (DE-A 2 624 527 und -528), ferner Diethylaminoethylpiperidin, 1,4-Diaza-(2,2,2)bicyclooctan, N,N'-Dimethylpiperazin, N,N'-Diethylpiperazin, N-Methyl-N'-dimethylaminoethylpiperazin, N,N'-Bisdimethylaminoethylpiperazin, N, N'-Bis-dimethylaminopropylpiperazin und andere, in der DE-A 2 636 787 zitierte Bisdialkylaminoalkylpiperazine. Bevorzugt aus dieser Gruppe sind die wasserlöslichen Verbindungen wie Tetramethylendiamin, permethyliertes Diethylentriamin, N-Methylmorpholin, Bis-2-dimethylaminoethylether und N-Methylpiperidin. Einsetzen lassen sich auch acylierte tertiäre Aminderivate, wie z.B. 1-Dimethylamino-3-formylaminopropan, N-(2-Dimethylaminoethyl)-propionamid, N-(2-Diethylaminoethyl)benzamid, sowie andere Amidgruppen (vorzugsweise Formamidgruppen) enthaltende tertiäre Amine gemäß DE-A 2 523 633 rund 2 732 292. Wirksam sind auch tertiäre Amine vom Pyridintyp und tertiäre Amine mit mindestens einem an das N-Atom gebundenen aromatischen Rest, wie Dimethylanilin. Insoweit es sich nicht um wasserlösliche tertiäre Amine handelt, soll ihr Siedepunkt zweckmäßig unter 250°C, bevorzugt unter 200°C, liegen.

Eine weitere Gruppe solcher geeigneten Katalysatoren sind Metall-Verbindungen, bevorzugt Verbindungen des Zinns, Zinks oder Bleis, beispielsweise Dibutylzinndilaurat, Zinnoctoat, Zinkacetylacetonat oder Bleioctoat.

Bevorzugte Katalysatoren sind jedoch die Hydroxide von Alkali- und Erdalkalimetallen. Besonders bevorzugt sind NaOH oder KOH.

Die erfindungsgemäß zu verwendenden Katalysatoren sind technisch leicht zugängliche, wohlfeile Katalysatoren, die gegebenenfalls abgetrennt und wieder verwendet werden können, in der bevorzugten Ausführungsform jedoch im Produkt verbleiben.

Basische Katalysatoren können gegebenenfalls durch Zugabe von Säure teilweise oder vollständig neutralisiert werden, was beispielsweise deren Abtrennung erleichtern oder deren Aktivität bei beliebigen Folgeumsetzungen vermindern kann.

Bevorzugt beträgt der Anteil des Katalysators, bezogen auf die eingesetzte Menge des Prepolymers, 0,0001 bis 0,099 Gew.-%.

Als Feststoffkonzentration des Hydrolysenansatzes wird im allgemeinen eine Konzentration von weniger als 90 Gew.-%, vorzugsweise 25 bis 75 Gew.-%, insbesondere 40 bis 70 Gew.-% gewählt.

Es sind zwar noch niedrigere Feststoffkonzentrationen gleichfalls möglich, doch aus praktischen Gründen (Wiederaufarbeitung der Lösungsmittel) nicht bevorzugt.

Die erfindungsgemäße Methode erlaubt bei ausreichender Beachtung der Verfahrensparameter eine Konversion von NCO- in NH₂-Gruppen mindestens 90 %, bevorzugt mindestens 92,5 %, besonders bevorzugt mindestens 95 %.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls vorübergehend eine leichte Trübung der Reaktionsmischung erhalten werden, da die Ausgangsstoffe nicht mehr vollständig gelöst sind.

Unter besonderen Umständen kann es auch notwendig werden, die Reaktion unter Druck durchzuführen, um ausreichend hohe Temperaturen zu erhalten.

Aufgrund der erfindungswesentlichen zusätzlichen Anwendung von kontinuierlichen Destillationstechniken in Schritt B) werden deutlich weniger gefärbte Polyamine mit geringeren Gehalten an monomeren Di- oder Triaminen erhalten als bei Einsatz diskontinuierlicher Destillationstechniken.

Unter einem kontinuierlichen Destillationsverfahren im Sinne der Erfindung wird ein Verfahren verstanden, bei dem nur eine Teilmenge des Reaktionsgemisches aus dem Verfahrensschritt A) kurzzeitig einer erhöhten Temperatur ausgesetzt wird, während die noch nicht im Destillationsprozess befindliche Menge bei einer deutlich niedrigeren Temperatur verbleibt und kontinuierlich der Destillation zugeführt wird, während Destillat und Rückstand abgeführt werden. Als erhöhte Temperatur ist dabei die zur Verdampfung der flüchtigen Bestandteile bei einem entsprechend gewählten Druck zu verstehen.

Bevorzugt wird die Destillation bei einer Temperatur von weniger als 100°C, besonders bevorzugt 40 bis 90°C, ganz besonders bevorzugt 60 bis 80°C und bei Drücken von weniger als 500 mbar, besonders bevorzugt weniger als 100 mbar, ganz besonders bevorzugt bei 0,001 bis 1,5 mbar durchgeführt.

Bevorzugt beträgt die Temperatur der noch nicht im Destillationsprozess befindliche Menge der prepolymerhaltigen Reaktionsmischung 0 bis 60°C, besonders bevorzugt 15 bis 40°C und ganz besonders bevorzugt 20 bis 40°C.

In einer bevorzugten Ausführungsform der Erfindung beträgt der Temperaturunterschied zwischen der Destillationstemperatur und der Temperatur der noch nicht im Destillationsprozess befindlichen Menge der prepolymerhaltigen Reaktionsmischung mindestens 5°C, besonders bevorzugt mindestens 15°C, ganz besonders bevorzugt 15 bis 40°C.

Bevorzugt wird die Destillation mit solch einer Geschwindigkeit geführt, dass die mittlere Verweilzeit der zu destillierenden prepolymerhaltigen Reaktionsmischung weniger als 10 min besonders bevorzugt weniger als 5 min bei der Destillationstemperatur beträgt und anschließend gegebenenfalls durch aktive Kühlung wieder auf die Ausgangstemperatur der prepolymerhaltigen Reaktionsmischung vor der Destillation gebracht wird. Bevorzugt ist die dabei durchlaufene Temperaturbelastung derart, dass die Temperatur der Reaktionsmischung vor der Destillation bzw. des Prepolymers nach der Destillation gegenüber der angewandten Destillationstemperatur mindestens 5°C, besonders bevorzugt mindestens 15°C, ganz besonders bevorzugt 15 bis 40°C niedriger ist.

Bevorzugte kontinuierliche Destillationstechniken sind die Kurzweg-, Fallfilm- und/oder Dünnschichtdestillation (siehe hierzu beispielsweise Chemische Technik, Wiley-VCH, Band 1,5. Auflage, Seiten 333-334).

Fallfilmverdampfer bestehen aus einem stehenden Bündel langer Rohre, in denen die zu verdampfende Flüssigkeit oben aufgegeben wird und als Film hinunterströmt. Im Mantelraum erfolgt die Beheizung durch Dampf. In den Rohren bilden sich Dampfblasen, die mit der Flüssigkeit abwärts strömen und für turbulente Bedingungen sorgen. Dampf und Flüssigkeit trennen sich am unteren Ende in einem Abscheidegefäß.

Dünnschichtverdampfer sind geeignete Apparate zur Verdampfung temperaturempfindlicher Stoffe, die nur kurzzeitig thermisch belastet werden dürfen. Die zu verdampfende Flüssigkeit wird oben in ein Rohr mit Mantelbeheizung aufgegeben. Sie strömt dort als Film herunter. Im Innern des Rohres rotiert ein an einer Welle aufgehängter Wischer und sorgt für eine konstante Filmdicke.

Nach Abschluss des erfindungsgemäßen Verfahrens beträgt der Restgehalt an Lösungsmitteln sowie gegebenenfalls anderer flüchtiger Bestandteile im hergestellten Polyamin weniger als 2 Gew.-%, vorzugsweise weniger als 1 Gew.-%.

Gleichzeitig beträgt dabei der Restgehalt an monomerem Di- oder Triamin nach Durchführung des erfindungsgemäßen Verfahrens bevorzugt nicht mehr als 0,08 Gew.-%, bevorzugt nicht mehr als 0,05 Gew.-%, bezogen auf das hergestellte Polyamin.

In einer bevorzugten Ausführungsform des erfindungsgemäßen Verfahrens wird ein aromatisches Diisocyanat im Überschuss bei einer Temperatur von 80 bis 120°C unter Rühren mit einer Polyhydroxyverbindung umgesetzt. Danach wird das überschüssige Diisocyanat mittels Dünnschichtdestillation abgetrennt, so dass der Gehalt an Diisocyanat im gebildeten Polyisocyanatprepolymer kleiner als 0,1 Gew.-% ist. Dieses Prepolymer wird dann im vorgelegten Gemisch aus Katalysator, vorzugsweise eine Base wie KOH, Lösungsmittel, insbesondere DMF, und Wasser hydrolysiert. Diese Reaktion wird typischerweise bei 50 bis 70°C durchgeführt. Danach erfolgt die Aufarbeitung mittels einer kontinuierlichen Destillation wie Dünnschichtdestillation bei Drücken von weniger als 5 mbar, vorzugsweise weniger als 1,5 mbar, und Temperaturen von 40 bis 90°C, bevorzugt 60 bis 80°C.

Die erfindungsgemäß erhaltenen, bevorzugt aromatischen Polyamine werden wegen ihres niedrigen Dampfdruckes vorzugsweise als Reaktionspartner für gegebenenfalls blockierte Polyisocyanate oder Epoxidharze eingesetzt. Die daraus resultierenden Polyurethanhamstoffe können dann beispielsweise als Beschichtung oder als poröse (Schäume) oder nicht-poröse Formkörper eingesetzt werden. Zur Herstellung von Beschichtungen, nicht-porösen Formkörpern oder Schäumen können die erfindungsgemäßen Polyamine gegebenenfalls auch mit anderen niedermolekularen (Molekulargewicht 32 bis 399 g/mol) und/oder höhermolekularen (Molekulargewicht 400 bis 12 000 g/mol) Verbindungen mit gegenüber Isocyanaten reaktiven Gruppen kombiniert werden. Besonders geeignet sind dabei Polyhydroxyverbindungen, welche vorstehend bereits im Zusammenhang mit der Herstellung des Polyisocyanat-Prepolymers beschrieben wurden.

Den Reaktivmischungen aus den erfindungsgemäß hergestellten Polyaminen, Polyisocyanaten, gegebenenfalls weiteren NCO-reaktiven Verbindungen und/oder Polyepoxiden können selbstverständlich auch die üblichen Hilfs- und Zusatzstoffe wie Pigmente, (Lack-) Additive, Thixotropiermittel, Verlaufsmittel, Emulgatoren und Stabilisatoren zugegeben werden.

Die Herstellung der Reaktivmischungen erfolgt durch Mischen der Komponenten in beliebiger Reihenfolge vor oder während deren Applikation, beispielsweise als Beschichtung.

Die Reaktivmischungen können mit den an sich bekannten Techniken wie Sprühen, Tauchen, Fluten oder Gießen auf Oberflächen appliziert werden. Nach dem Ablüften gegebenenfalls vorhandener Lösungsmittel, wobei die Reaktivmischungen vorzugsweise frei von Lösungsmitteln sind, härten die Beschichtungen dann bei Umgebungsbedingungen, insbesondere bei minus 20°C bis 40°C, aber auch bei höheren Temperaturen von beispielsweise 40 bis 200°C.

Beschichtungen aus solchen Polyurethanhamstoffen können beispielsweise auf metallische Oberflächen, z.B. aus Eisen, Stahl, Aluminium, Bronze, Messing oder Chrom aufgetragen werden. Aber auch die Beschichtung von mineralischen Oberflächen, z.B. aus Glas, Keramik, Stein oder Beton, natürlichen Materialien wie Holz oder auch Kunststoffen, z.B. in Form bereits bestehender Beschichtungen, ist möglich.

### Beispiele:

Wenn nicht anders angegeben, beziehen sich alle Prozentangaben in den Ausführungbeispielen auf das Gewicht. Die Bestimmung der Gehalte an Toluylendiisocyanat und Toluylendiamin erfolgte mittels HPLC. Angegeben ist jeweils die Summe aus dem 2,4- und 2,6-Isomer. Die NCO-Gehalte wurden mittels Rücktitration von im Überschuß zugesetztem Dibutylamin mit Salzsäure bestimmt, die NH₂-Gehalte durch Titration mit Perchlorsäure/Eisessig.

Die Viskositätsmessung erfolgte mit einem Rotationsviskosimeter der Firma Haake bei 23°C.

### Vergleichsbeispiel 1:

### a) Herstellung des Polyisocyanat-Prepolymers:

Innerhalb von 5 Stunden wurden unter Rühren bei einer Temperatur von 80°C 1027,2 g eines Polypropylenglykols (Molgewicht 2000 g/mol, difunktionell, hergestellt mittels Basen-freier DMC-Katalyse) zu einer Mischung von 722,9 g 2,4-Toluylendiisocyanat (TDI, Desmodur^{®} T 100, Bayer MaterialScience AG, DE) und 40 mg 2-Chlorpropionsäure gegeben. Nach Erreichen eines NCO-Gehalts von 17,45 %, wurde die Reaktionsmischung mittels Dünnschichtdestillation bei 140°C und einem Druck < 1 mbar von überschüssigem TDI befreit.

| | |
|---|---|
| NCO-Gehalt: | 3,63% |
| Viskosität (23°C): | 5 050 mPas |
| TDI-Gehalt (frei): | 0,03% |

### b) Herstellung des Polyamins:

Innerhalb von 80 Minuten wurden unter Rühren bei einer Temperatur von 95°C 1000 g des oben hergestellten Prepolymers zu einer Mischung von 950 g Dimethylformamid (DMF), 0,1 g KOH und 30 g Wasser gegeben. Nach einer weiteren Stunde Rühren bei 95°C, wurden die flüchtigen Bestandteile schließlich bei 95°C (Sumpftemperatur) und 0,6 mbar destillativ abgetrennt. Das erhaltene Polyamin wies folgende Kennzahlen auf:

| | |
|---|---|
| NH₂-Gehalt: | 1,41% |
| Viskosität (23°C): | 12 110 mPas |
| Feststoffgehalt: | 99,7% |
| TDA-Gehalt (frei): | 0,24% |

Der ermittelte Gehalt an freiem Toluylendiamin (TDA) war dabei deutlich höher, als aus dem TDI-Gehalt des eingesetzten Prepolymers zu erwarten gewesen wäre. Die Hydrolyse bei 95°C und die diskontinuierliche Destillation führen zu einem TDA-Gehalt von deutlich größer 0,1 Gew.-%.

### Vergleichsbeispiel 2:

### a) Herstellung des Polyisocyanat-Prepolymers:

Die Herstellung erfolgte analog Vergleichsbeispiel 1, Schritt a). Das erhaltene Produkt wies die folgenden Kennzahlen auf:

| | |
|---|---|
| NCO-Gehalt: | 3,60 % |
| TDI-Gehalt (frei): | 0,01 % |

### b) Herstellung des Polyamins:

Innerhalb von 80 Minuten wurden unter Rühren bei einer Temperatur von 65°C 1010,1 g des wie oben hergestellten Prepolymers zu einer Mischung von 959,6 g Dimethylformamid (DMF), 0,1 g KOH und 30,3 g Wasser gegeben. Nach einer weiteren Stunde Rühren bei 65°C wurden die flüchtigen Bestandteile schließlich bei 65°C (Sumpftemperatur) und 0,6 mbar destillativ abgetrennt. Das erhaltene Polyamin wies folgende Kennzahlen auf:

| | |
|---|---|
| NH₂-Gehalt: | 1,36% |
| Viskosität (23°C): | 14 690 mPas |
| Feststoffgehalt: | 99,4% |
| TDA-Gehalt (frei): | 0,19% |

Der ermittelte Gehalt an freiem Toluylendiamin (TDA) war wiederum deutlich höher, als aus dem TDI-Gehalt des eingesetzten Prepolymers zu erwarten gewesen wäre. Selbst die Hydrolyse bei deutlich verringerter Temperatur (65°C) führte bei der nach wie vor angewandten diskontinuierlichen Destillation zu einem TDA-Gehalt von deutlich größer 0,1 Gew.-%.

### Vergleichsbeispiel 3:

### a) Herstellung des Polyisocyanat-Prepolymers:

Es wurde das gleiche Prepolymer wie in Beispiel 1 eingesetzt.

### b) Herstellung des Polyamins:

Innerhalb von 80 Minuten wurden unter Rühren bei einer Temperatur von 75°C 1010,1 g des oben hergestellten Prepolymers zu einer Mischung von 959,6 g Dimethylformamid (DMF), 0,08 g KOH und 30,3 g Wasser gegeben. Nach einer weiteren Stunde Rühren bei 65°C wurde die Reaktionsmischung auf 30°C abgekühlt und zur Neutralisation des Katalysators wurden 0,15 g Phosphorsäure zugegeben. Schließlich wurden die flüchtigen Bestandteile bei 70°C und 0,5-1,5 mbar mittels kontinuierlicher Destillation in einem Dünnschichtverdampfer abgetrennt. Das erhaltene Polyamin wies folgende Kennzahlen auf:

| | |
|---|---|
| NH₂-Gehalt: | 1,35% |
| Viskosität (23°C): | 10 870 mPas |
| Feststoffgehalt: | 99,0% |
| TDA-Gehalt (frei): | 0,14% |

Der ermittelte Gehalt an freiem Toluylendiamin (TDA) war wiederum deutlich höher, als aus dem TDI-Gehalt des eingesetzten Prepolymers zu erwarten gewesen wäre. Selbst bei kontinuierlicher Destillation führte die bei Hydrolyse angewandte Temperatur (75°C) zu einem TDA-Gehalt von deutlich größer 0,1 Gew.-%.

### Beispiel 1:

### a) Herstellung des Polyisocyanat-Prepolymers:

Die Herstellung erfolgte analog Vergleichsbeispiel 1, Schritt a). Das erhaltene Produkte wies die folgenden Kennzahlen auf:

| | |
|---|---|
| NCO-Gehalt: | 3,63% |
| Viskosität (23°C): | 4 880 mPas |
| TDI-Gehalt (frei): | 0,08 % |

### b) Herstellung des Polyamins:

Innerhalb von 80 Minuten wurden unter Rühren bei einer Temperatur von 65°C 1010,1 g des oben hergestellten Prepolymers zu einer Mischung von 959,6 g Dimethylformamid (DMF), 0,08 g KOH und 30,3 g Wasser gegeben. Nach einer weiteren Stunde Rühren bei 65°C wurden die flüchtigen Bestandteile schließlich bei 70°C und 0,5-1,5 mbar mbar mittels kontinuierlicher Destillation in einem Dünnschichtverdampfer abgetrennt. Das erhaltene Polyamin wies folgende Kennzahlen auf:

| | |
|---|---|
| NH₂-Gehalt: | 1,35% |
| Viskosität (23°C): | 11 230 mPas |
| Feststoffgehalt: | 98,9% |
| TDA-Gehalt (frei): | 0,07% |

Mit der beschriebenen Verfahrensweise, d.h. Hydrolyse bei 65°C und kontinuierliche Destillation bei 70°C im Dünnschichtverdampfer, wurden deutlich niedrigere TDA-Gehalte als nach dem Verfahren des Vergleichsbeispiels 1, 2 und 3 erhalten.

### Beispiel 2:

### a) Herstellung des Polyisocyanat-Prepolymers:

Die Herstellung erfolgte analog Vergleichsbeispiel 1, Schritt a). Das erhaltene Produkte wies die folgenden Kennzahlen auf:

| | |
|---|---|
| NCO-Gehalt: | 3,62% |
| Viskosität (23°C): | 4 862 mPas |
| TDI-Gehalt (frei): | 0,06% |

### b) Herstellung des Polyamins:

Innerhalb von 80 Minuten wurden unter Rühren bei einer Temperatur von 65°C 1010,1 g des oben hergestellten Prepolymers zu einer Mischung von 959,6 g Dimethylformamid (DMF), 0,08 g KOH und 30,3 g Wasser gegeben. Nach einer weiteren Stunde Rühren bei 65°C wurde die Reaktionsmischung auf 30°C abgekühlt und zur Neutralisation des Katalysators wurden 0,15 g Phosphorsäure zugegeben. Schließlich wurden die flüchtigen Bestandteile bei 70°C und 0,5-1,5 mbar mittels kontinuierlicher Destillation in einem Dünnschichtverdampfer abgetrennt. Das erhaltene Polyamin wies folgende Kennzahlen auf:

| | |
|---|---|
| NH₂-Gehalt: | 1,34% |
| Viskosität (23°C): | 14 100 mPas |
| Feststoffgehalt: | 99,8% |
| TDA-Gehalt (frei): | 0,05% |

Mit der beschriebenen Verfahrensweise, d.h. Hydrolyse bei 65°C, Neutralisation des Katalysators und kontinuierliche Destillation bei 65°C im Dünnschichtverdampfer, wurden deutlich niedrigere TDA-Gehalte als nach den Verfahren der Vergleichsbeispiele 1, 2 und 3 erhalten.

## Patentansprüche

1. Verfahren zur Herstellung von Polyaminen mit primären Aminogruppen und einem Anteil an monomerem Di- oder Triamin von weniger als 0,1 Gew.-%, bei dem
A) die freien NCO-Gruppen eines Polyisocyanatprepolymers mit einer mittleren NCO-Funktionalität von mindestens 1,5 unter CO₂-Abspaltung
a1) in Anwesenheit von mindestens 10 Gewichtsteilen, bezogen auf 100 Gewichtsteile des eingesetzten Polyisocyanat-Prepolymers, eines wasserlöslichen oder wassermischbaren Lösungsmittels,
a2) unter Einwirkung von Wasser bei einem Mol-Verhältnis von Wasser zu NCO-Gruppen von 0,75 bis 50 und einem Gewichtsverhältnis von Lösungsmittel zu Wasser von 3 bis 200,
a3) in Gegenwart von 0,00005 bis 1 Gew.-% bezogen auf die Menge des eingesetzten Prepolymers eines Katalysators und
a4) unter Einhaltung eines Temperaturintervalls von 30 bis 70°C hydrolysiert und anschließend
B) die flüchtigen Bestandteile der resultierenden Reaktionsmischung mittels kontinuierlicher Destillationsverfahren abgetrennt werden.

2. Verfahren gemäß Anspruch 1, **dadurch gekennzeichnet, dass** die Hydrolysetemperatur 60 bis 70°C beträgt.

3. Verfahren gemäß Anspruch 1 oder 2, **dadurch gekennzeichnet, dass** als Lösemittel Dimethylformamid (DMF), Dimethylacetamid, Formamid, Diethylformamid, Dimethylpropionsäureamid, Benzoesäuredimethylamid, N-Methylpyrrolidon oder deren Mischungen eingesetzt werden.

4. Verfahren gemäß einem der Ansprüche 1 bis 3, **dadurch gekennzeichnet, dass** das Mol-Verhältnis von Wasser zu freien NCO-Gruppen des Polyisocyanatprepolymers 1,5 bis 7,5 beträgt.

5. Verfahren gemäß einem der Ansprüche 1 bis 4, **dadurch gekennzeichnet, dass** das Gewichtsverhältnis von Lösungsmittel zu Wasser 25 bis 75 beträgt.

6. Verfahren gemäß einem der Ansprüche 1 bis 5, **dadurch gekennzeichnet, dass** als Katalysatoren Hydroxide von Alkali- und Erdalkalimetallen in Mengen von 0,0001 bis 0,099 Gew.-% bezogen auf das eingesetzte Prepolymer verwendet werden.

7. Verfahren gemäß einem der Ansprüche 1 bis 6, **dadurch gekennzeichnet, dass** die Hydrolyse solange geführt wird, bis die Konversion von NCO- in NH₂-Gruppen mindestens 95 % beträgt.

8. Verfahren gemäß einem der Ansprüche 1 bis 7, **dadurch gekennzeichnet, dass** die für die kontinuierliche Destillation die Kurzweg-, Fallfilm- und/oder Dünnschichtdestillation eingesetzt wird.

9. Verfahren gemäß einem der Ansprüche 1 bis 8, **dadurch gekennzeichnet, dass** der Gehalt an monomerem Di- oder Triamin nach Durchführung des Verfahrens nicht mehr als 0,08 Gew.-% bezogen auf das hergestellte Polyamin beträgt.

10. Verfahren gemäß einem der Ansprüche 1 bis 9, **dadurch gekennzeichnet, dass** die Temperatur bei der kontinuierlichen Destillation unter 100°C bei einem Druck von weniger als 500 mbar beträgt, die kontinuierliche Destillation mit solch einer Geschwindigkeit gefiihrt, dass die mittlere Verweilzeit der zu destillierenden prepolymerhaltigen Reaktionsmischung weniger als 10 min bei dieser Destillationstemperatur beträgt und der Temperaturunterschied zwischen der Reaktionsmischung vor der Destillation und des Prepolymers nach der Destillation gegenüber der angewandten Destillationstemperatur mindestens 15°C beträgt.

## Claims

1. Process for the preparation of polyamines having primary amino groups and a content of monomeric di- or triamine of less than 0.1 wt.%, in which
A) the free NCO groups of a polyisocyanate prepolymer having an average NCO functionality of at least 1.5 are hydrolysed, with CO₂ being split off,
a1) in the presence of at least 10 parts by weight per 100 parts by weight of the polyisocyanate prepolymer employed of a water-soluble or water-miscible solvent,
a2) under the action of water, at a molar ratio of water to NCO groups of from 0.75 to 50 and a weight ratio of solvent to water of from 3 to 200,
a3) in the presence of from 0.00005 to 1 wt.%, based on the amount of prepolymer employed, of a catalyst and
a4) while maintaining a temperature interval of from 30 to 70 °C, and subsequently
B) the volatile constituents of the resulting reaction mixture are separated off by means of continuous distillation processes.

2. Process according to claim 1, **characterized in that** the hydrolysis temperature is 60 to 70 °C.

3. Process according to claim 1 or 2, **characterized in that** dimethylformamide (DMF), dimethylacetamide, formamide, diethylformamide, dimethylpropionic acid amide, benzoic acid dimethylamide, N-methylpyrrolidone or mixtures thereof are employed as the solvent.

4. Process according to one of claims 1 to 3, **characterized in that** the molar ratio of water to free NCO groups of the polyisocyanate prepolymer is 1.5 to 7.5.

5. Process according to one of claims 1 to 4, **characterized in that** the weight ratio of solvent to water is 25 to 75.

6. Process according to one of claims 1 to 5, **characterized in that** hydroxides of alkali and alkaline earth metals in amounts of from 0.0001 to 0.099 wt.%, based on the prepolymer employed, are used as catalysts.

7. Process according to one of claims 1 to 6, **characterized in that** the hydrolysis is carried out until the conversion of NCO into NH₂ groups is at least 95 %.

8. Process according to one of claims 1 to 7, **characterized in that** molecular, falling film and/or thin layer distillation is employed for the continuous distillation.

9. Process according to one of claims 1 to 8, **characterized in that** the content of monomeric di- or triamine after the process has been carried out is not more than 0.08 wt.%, based on the polyamine prepared.

10. Process according to one of claims 1 to 9, **characterized in that** the temperature during the continuous distillation is below 100 °C under a pressure of less than 500 mbar, the continuous distillation is conducted at a speed such that the average dwell time of the prepolymer-containing reaction mixture to be distilled is less than 10 min at this distillation temperature and the temperature difference between the reaction mixture before the distillation and the prepolymer after the distillation compared with the distillation temperature applied is at least 15 °C.

## Revendications

1. Procédé de production de polyamines comportant des groupes amino primaires et une fraction de di- ou de triamine monomère inférieure à 0,1 % en poids, dans lequel
A) les groupes NCO libres d'un prépolymère de polyisocyanate possédant une fonctionnalité NCO moyenne d'au moins 1,5 sont hydrolysés avec élimination de CO₂
a1) en présence d'au moins 10 parties en poids (pour 100 parties en poids du prépolymère de polyisocyanate mis en oeuvre) d'un solvant soluble dans l'eau ou miscible avec l'eau,
a2) sous l'action d'eau avec un rapport molaire entre l'eau et les groupes NCO compris entre 0,75 et 50 et un rapport pondéral entre le solvant et l'eau compris entre 3 et 200,
a3) en présence de 0,00005 à 1 % en poids par rapport à la proportion du prépolymère mis en oeuvre, d'un catalyseur et
a4) en respectant un intervalle de températures compris entre 30 et 70 °C, et ensuite
B) les constituants volatils du mélange réactionnel résultant sont séparés par un procédé de distillation continue.

2. Procédé selon la revendication 1, **caractérisé en ce que** la température d'hydrolyse est comprise entre 60 et 70 °C.

3. Procédé selon la revendication 1 ou 2, **caractérisé en ce que** l'on utilise comme solvant, du diméthylformamide (DMF), du diméthylacéta-mide, du formamide, du diéthylformamide, du diméthylpropionamide, du dimé-thylamide de l'acide benzoïque, de la N-méthylpyrrolidone ou des mélanges de ceux-ci.

4. Procédé selon une des revendications 1 à 3, **caractérisé en ce que** le rapport molaire entre l'eau et les groupes NCO libres du prépolymère de polyisocyanate est compris entre 1,5 et 7,5.

5. Procédé selon une des revendications 1 à 4, **caractérisé en ce que** le rapport pondéral entre le solvant et l'eau est compris entre 25 et 75.

6. Procédé selon une des revendications 1 à 5, **caractérisé en ce que** l'on utilise comme catalyseur, des hydroxydes de métaux alcalins et al-calinoterreux en proportions comprise entre 0,0001 et 0,099 % en poids par rapport au prépolymère mis en oeuvre.

7. Procédé selon une des revendications 1 à 6, **caractérisé en ce que** l'hydrolyse est poursuivie jusqu'à ce que la conversion des groupes NCO en groupes NH₂ atteigne au moins 95 % en poids.

8. Procédé selon une des revendications 1 à 7, **caractérisé en ce que** pour la distillation continue, on a recours à la distillation moléculaire, à la distillation à film ruisselant et/ou à la distillation à couche mince.

9. Procédé selon l'une des revendications 1 à 8, **caractérisé en ce que** la proportion de di- ou de triamine monomère après l'exécution du procédé n'excède plus 0,08 % en poids par rapport à la polyamine produite.

10. Procédé selon l'une des revendications 1 à 9, **caractérisé en ce que** la température lors de la distillation continue est inférieure à 100 °C sous une pression inférieure à 500 mbar, la distillation continue est opérée à une vitesse telle que la durée de séjour moyenne du mélange réactionnel contenant le prépolymère à distiller est inférieure à 10 minutes à cette température de distillation et la différence de température entre le mélange réactionnel avant la distillation et celle du prépolymère après la distillation atteint au moins 15 °C par rapport à la température de distillation utilisée.
